# EUROPÄISCHE PATENTSCHRIFT

(11) **EP 3 837 192 B1**
(45) Veröffentlichungstag und Bekanntmachung des Hinweises auf die Patenterteilung: **28.02.2024**
(21) Anmeldenummer: 19753351.6
(22) Anmeldetag: 13.08.2019
(51) Int. Cl.: B65G 15/60, B65G 21/16, B65G 15/62

(54) **TRANSPORTVORRICHTUNG**
TRANSPORT DEVICE
DISPOSITIF DE TRANSPORT

(30) Priorität: 16.08.2018 DE 102018119914
(43) Veröffentlichungstag der Anmeldung: 23.06.2021
(73) Patentinhaber: KHS GmbH, 44143 Dortmund (DE)
(72) Erfinder: GRÄVINGHOLT, Stefan, 58454 Witten (DE); GREIVING, Thomas, 59348 Lüdinghausen (DE); PAROTH, Berthold, 44289 Dortmund (DE); SARAJLIJA, Zlatko, 44369 Dortmund (DE)
(86) Internationale Anmeldenummer: PCT/EP2019/071673
(87) Internationale Veröffentlichungsnummer: WO 2020/035477

(56) Entgegenhaltungen:
- WO-A1-02/34650
- JP-B2- 3 942 008
- NL-C2- 2 004 378
- US-A1- 2004 216 987
- US-B1- 6 170 649
- US-B1- 7 753 194

## Beschreibung

Die Erfindung bezieht sich auf eine Transportvorrichtung zum Transportieren von Transportgut in einer Transportrichtung gemäß dem Oberbegriff des Patentanspruches 1.

Gattungsgemäße Transportvorrichtungen werden in der Getränkeindustrie zum Transportieren von Stückgütern verwendet und weisen in der Regel eine Vielzahl von jeweils eine geschlossene Schlaufe bildende und umlaufend angetriebene Transportelemente, insbesondere auch in Form von Transportketten oder Scharnierbandketten, auf. Derartige Transportvorrichtungen sind dem einschlägigen Fachmann hinlänglich bekannt. Die Transportelemente bilden jeweils mit ihrer oberen, sich gegen wenigstens eine Gleichführung abstützenden Länge die gemeinsame horizontale oder im Wesentlichen horizontale Transportebene oder -fläche, auf die das Transportgut mit seinem Transportgutboden oder seinem Standboden aufsteht.

Bei den solchen Transportvorrichtungen handelt es sich dabei insbesondere um Transporteure der Getränkeindustrie, die beispielsweise eine Leistung von mehr als 10000, bevorzugt von mehr als 50000 beförderten Stückgütern, beispielsweise Behältern, pro Stunde aufweisen.

Mithin umfassen derartige Transportvorrichtungen üblicherweise ein Gerüst bzw. einen Maschinenrahmen, an dem die Transportelemente aufgenommen, gehalten und/oder geführt sind. Einzelne Gerüste sind dabei in der Regel an bestimmte Rastermaße hinsichtlich ihrer jeweiligen Länge und/oder Breite angepasst, so dass einzelne Gerüste kombiniert werden können und die einzelnen Maschinen einer Gesamtproduktionsanlage innerhalb der Getränkeindustrie miteinander verbindbar sind. Hierfür weisen die Gerüste einen Tragkörper auf, an dem Profilelemente, insbesondere C-Profil-Elemente, angeordnet sind. An der Oberseite dieser Profilelemente verlaufen die Transportelemente, vorzugsweise die Transportketten, wobei diese durch Antriebsmotoren endlos umlaufend bewegt werden und dabei auf den Profilelementen gleitend geführt sind.

Ebenfalls ist es bekannt, zur Herabsetzung des Reibungskoeffizienten zwischen den Profilelementen und den Transportelementen Gleitelemente, insbesondere Gleitleisten, vorzusehen, die einen geringen Reibungskoeffizienten aufweisenden Belag für die Transportelemente ausbilden, um dadurch den Verschleiß an und die erforderlichen Antriebskräfte für die Transportelemente zu reduzieren.

Gemäß dem Stand der Technik werden diese Gleitleisten durch zusätzliche Elemente z.B. Schrauben in Verbindung mit Zentrierscheiben oder aber durch Klemmelemente auf den Profilelementen befestigt, insbesondere an den Profilelementen fest angeordnet. Dabei ist es hinsichtlich der Befestigung der Gleitleisten auf den Profilelementen wichtig, dass die Gleitleisten besonders eben und plan auf den Profilelementen aufliegen.

Würden die Gleitleisten nicht eben und plan auf den Profilelementen aufliegen, so würden diese Unebenheiten zunächst zu unerwünschten Bewegungen der auf den Gleitleisten aufliegenden und sich - zum Teil mit hoher Geschwindigkeit - in Transportrichtung bewegenden Transportketten führen. Diese unerwünschten Bewegungen, beispielsweise Querbewegungen oder aber auch Höhenbewegungen der Transportketten übertragen sich auf die von den Transportketten transportieren Behälter, welche dann in ungünstigen Fällen umfallen, manuelle Eingriffe erforderlich machen und somit den Transport nachhaltig stören.

Die aus dem Stand der Technik bekannten Gleitleisten selbst sind durch ihren Herstellungsprozess (z.B. Extrudieren) in ihrer Längsrichtung weder eben noch plan. Weiterhin führt der Umstand, dass diese Gleitleisten in der Regel aufgerollt transportiert und angeliefert werden, zu zusätzlichen Abweichungen von der Idealform. Bedingt durch diese Abweichungen von der Idealform ist bei Gleitleisten entsprechend dem Stand der Technik ein erheblicher konstruktiver, mechanischer und manueller Aufwand erforderlich, um diese Gleitleisten mit der erforderlichen Planheit und Ebenheit auf den Profilelementen zu befestigen. Insbesondere sind dazu zahlreiche Verschraubungen entlang der Transportstrecke notwendig, welche bei der manuellen Montage der entsprechende Gleitleisten an den zugehörigen Profilelementen einen hohen Zeitaufwand und damit einhergehend auch erhebliche Kosten verursachen.

Aus der Druckschrift US 6 170 649 B1 ist dabei eine Fördererrahmenanordnung bekannt geworden, die zum Zusammenbau keine Verwendung herkömmlicher Befestigungselemente und/oder Schweißverbindungen erfordert. Die Rahmenanordnung umfasst eine Basis mit einem Schlitz und eine Stütze mit einer sich durch den Schlitz erstreckenden Lasche. Die Lasche wird zum Sockel hin plastisch verformt, um den Träger mit dem Sockel zu koppeln. US 6 170 649 B1 offenbart eine Transportvorrichtung nach dem Oberbegriff des Anspruchs 1.

Der vorliegenden Erfindung liegt die Aufgabe zu Grunde, eine Transportvorrichtung zum Transportieren von Transportgut in einer Transportrichtung bereitzustellen, die die vorgenannten Nachteile vermeidet und hierbei insbesondere eine einfache und gleichzeitig eben und plane Anordnung der Gleitleisten auf den Profilelementen der Transportvorrichtung ermöglicht. Diese Aufgabe wird mit den Merkmalen des Patentanspruches 1 gelöst. Die Unteransprüche betreffen dabei besonders bevorzugte Ausführungsvarianten der Erfindung.

Der wesentliche Aspekt der vorliegenden Erfindung besteht dabei darin, eine Transportvorrichtung zum Transportieren von Transportgut in einer Transportrichtung vorzuschlagen, umfassend wenigstens einen Maschinenrahmen, an dem wenigstens ein, eine Schlaufe bildendes und umlaufend angetriebenes Transportelement angeordnet ist, wobei das Transportelement über eine bezogen auf die Transportrichtung vordere Umlenkeinrichtung sowie über eine bezogen auf die Transportrichtung rückwärtige Umlenkeinrichtung geführt ist, wobei zwischen der vorderen und der rückwärtigen Umlenkeinrichtung mittels des wenigstens einen Transportelementes eine Transportstrecke für das Transportgut ausgebildet ist, wobei das wenigstens eine Transportelement zumindest entlang der Transportstrecke auf wenigstens einer Gleitleiste gleitend aufliegend geführt ist, wobei die wenigstens eine Gleitleiste zumindest abschnittsweise entlang der Transportstrecke mit dem Profilelement direkt verbunden ist, das seinerseits mit wenigstens einem Tragkörper des Maschinenrahmens verbunden ist. Die Erfindung zeichnet sich insbesondere dadurch aus, dass zur direkten Verbindung die wenigstens eine Gleitleiste zumindest abschnittsweise entlang der Transportstrecke formschlüssig auf das Profilelement aufgesteckt und/oder aufgedrückt ist. Dadurch können die Gleitleisten ohne weitere zusätzliche Verbindungmittel lagefest auf den Profilelementen gehalten werden. Auch ein An- und Abheben der Gleitleisten über ihre Längserstreckung wird durch die erfindungsgemäße Ausbildung der Gleitleisten verhindert.

Gemäß einer vorteilhaften Ausführungsvariante kann vorgesehen sein, dass zur direkten Verbindung die wenigstens eine Gleitleiste zumindest abschnittsweise entlang der Transportstrecke form- und kraftschlüssig auf das Profilelement aufgesteckt und/oder aufgedrückt ist.

Gemäß einer weiteren vorteilhaften Ausführungsvariante kann vorgesehen sein, dass zumindest eine Gleitleiste über ihre gesamte Längserstreckung form- und/oder kraftschlüssig auf das Profilelement aufgesteckt und/oder aufgedrückt und an dem Profilelement lagefixiert gehalten ist.

Gemäß einer nochmals weiteren vorteilhaften Ausführungsvariante kann vorgesehen sein, dass die wenigstens eine Gleitleiste in einer Ebene parallel oder im Wesentlichen parallel unterhalb einer Transportebene lagefixiert auf das Profilelement aufgesteckt ist.

Erfindungsgemäß ist vorgesehen, dass die wenigstens eine Gleitleiste eine im Wesentlichen U-förmige Querschnittfläche ausbildet, indem die wenigstens eine Gleitleiste einen, einen Grundteil ausbildenden Stegabschnitt sowie zwei sich seitlich daran erstreckende Schenkelabschnitte aufweist.

Gemäß einer nochmals weiteren vorteilhaften Ausführungsvariante kann vorgesehen sein, dass die wenigstens eine Gleitleiste einteilig, insbesondere einstückig, ausgebildet ist.

Gemäß einer nochmals weiteren vorteilhaften Ausführungsvariante kann vorgesehen sein, dass die wenigstens eine Gleitleiste spiegelsymmetrisch zu einer lotrecht zur Transportebene orientierten Spiegelebene ausgebildet ist.

Gemäß einer nochmals weiteren vorteilhaften Ausführungsvariante kann vorgesehen sein, dass die wenigstens eine Gleitleiste über ihre Längserstreckung entlang der Transportstrecke im Querschnitt identisch ausgebildet ist.

Gemäß einer nochmals weiteren vorteilhaften Ausführungsvariante kann vorgesehen sein, dass die seitlichen Schenkelabschnitte mit dem Stegabschnitt im Querschnitt jeweils einen Winkel kleiner 90° Grad einschließen, wobei der Winkel bevorzugt zwischen 85° und 60° Grad, vorteilhaft zwischen 80° und 65° liegt und besonders bevorzugt 76° Grad beträgt.

Erfindungsgemäß ist vorgesehen, dass die Schenkelabschnitte derart elastisch verformbar ausgebildet sind, dass zumindest deren freien Enden beim Aufstecken und/oder Aufdrücken der Gleitleiste auf das Profilelement auseinander gedrückt werden und sich anschließend wieder zumindest formschlüssig an das Profilelement anlegen.

Gemäß einer nochmals weiteren vorteilhaften Ausführungsvariante kann vorgesehen sein, dass die Schenkelabschnitte der wenigstens einen Gleitleiste kraft- und formschlüssig an seitlichen Schenkelabschnitten des Profilelementes anliegen, und zwar vorzugsweise unter einer auf die Schenkelabschnitte einwirkenden definierten Vorspannkraft. Bevorzugt wird diese Vorspannkraft durch eine nach dem Aufbringen der Gleitleiste auf das Profilelement weiter bestehende elastische Restverformung der Schenkelabschnitte der Gleitleiste erzeugt.

Gemäß einer nochmals weiteren vorteilhaften Ausführungsvariante kann vorgesehen sein, dass durch das Aufstecken der wenigstens eine Gleitleiste auf dem Profilelement die Innenkontur der Gleitleiste kontaktschlüssig an der Außenkontur des Profilelementes anliegt, und vorzugsweise über die gesamte Längserstreckung der Gleitleiste.

Gemäß einer nochmals weiteren vorteilhaften Ausführungsvariante kann vorgesehen sein, dass die wenigstens eine Gleitleiste im Übergangsbereich von dem Stegabschnitt zu den seitlichen Schenkelabschnitten eine Materialschwächung aufweist.

Gemäß einer nochmals weiteren vorteilhaften Ausführungsvariante kann vorgesehen sein, dass die wenigstens eine Gleitleiste im Übergangsbereich von dem Stegabschnitt zu den seitlichen Schenkelabschnitten an der Außenkontur der seitlichen Schenkelabschnitte eine Materialverstärkung aufweist.

Gemäß einer nochmals weiteren vorteilhaften Ausführungsvariante kann vorgesehen sein, dass die wenigstens eine Gleitleiste auf das Profilelement und einen Einlauffinger form- und/oder kraftschlüssig aufgesteckt und/oder aufgedrückt ist.

Gemäß einer nochmals weiteren vorteilhaften Ausführungsvariante kann vorgesehen sein, dass die wenigstens eine Gleitleiste an ihrer Oberseite im Querschnitt konvex gewölbt ist.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates) wie z. B. einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Die Erfindung wird im Folgenden anhand der Figuren an Ausführungsbeispielen näher erläutert. Es zeigen:
- Fig. 1: eine schematische Seitenansicht einer beispielhaften Transportvorrichtung zum Transportieren von Stückgütern,
- Fig. 2: eine schematische Schnittdarstellung entlang der Schnittlinie A-A aus Figur 1,
- Fig. 3: eine schematische Perspektivansicht eines freigestellten Profilelementes mit daran befestigter Gleitleiste,
- Fig. 4: eine schematische Vorderansicht der in Figur 3 dargestellten Perspektivdarstellung, die die Querschnittsflächen sowohl des Profilelementes als auch der Gleitleiste zeigt, und
- Fig. 5: eine Vorderansicht und damit Querschnitt einer freigestellten Gleitleiste.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als Schemataansicht zur Erläuterung der Arbeitsweise dargestellt. Insbesondere dienen die Darstellungen in den Figuren nur der Erläuterung des grundlegenden Prinzips der Erfindung. Es wurde bewusst aus Übersichtlichkeitsgründen darauf verzichtet, alle Bestandteile der Vorrichtung zu zeigen, da diese aus dem Stand der Technik bekannt sind.

Zudem sind zum besseren Verständnis in den Figuren jeweils senkrecht zueinander verlaufende Koordinaten- oder Raumachsen X, Y und Z angegeben, von denen bei der dargestellten Ausführungsform die X-Achse und Z-Achse eine horizontale oder im Wesentlichen horizontale XZ-Ebene definieren und von denen die Y-Achse senkrecht zu dieser XZ-Ebene orientiert ist. Dabei wird durch die XZ-Ebene auch eine Transportebene TE gebildet.

Die in den Figuren allgemein mit 100 bezeichnete, beispielhafte Transportvorrichtung dient insbesondere zum Transportieren von Transportgut 102 in wenigstens einer Transportrichtung A zwischen jeweils nicht nähergehend dargestellten Behälterbehandlungsmaschinen und/oder Überschubstationen und/oder Transferstationen und/oder Überleitstationen für die Verpackungs- und/oder Getränkeindustrie. Besonders vorteilhaft weist die Transportvorrichtung 100 dabei eine Leistung von mehr als 10000, bevorzugt von mehr als 50000 beförderten Stückgütern 102, beispielsweise Behältern, pro Stunde auf.

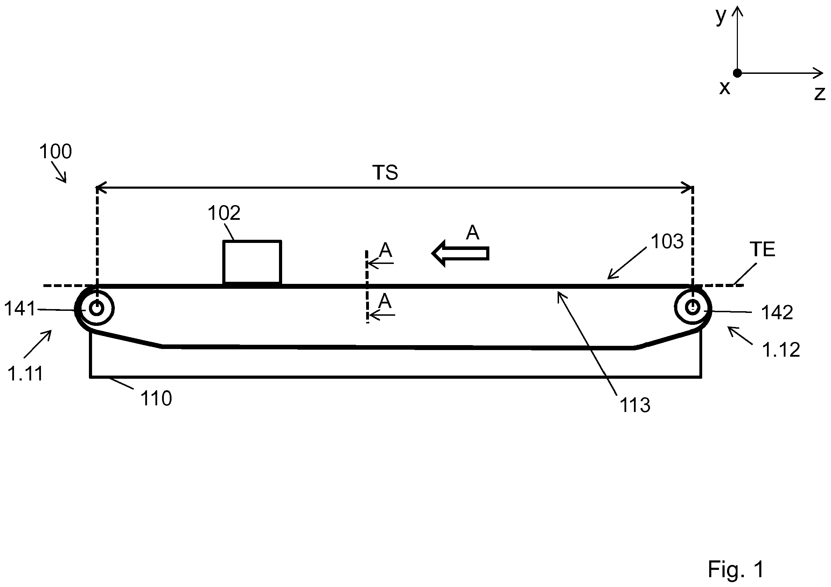

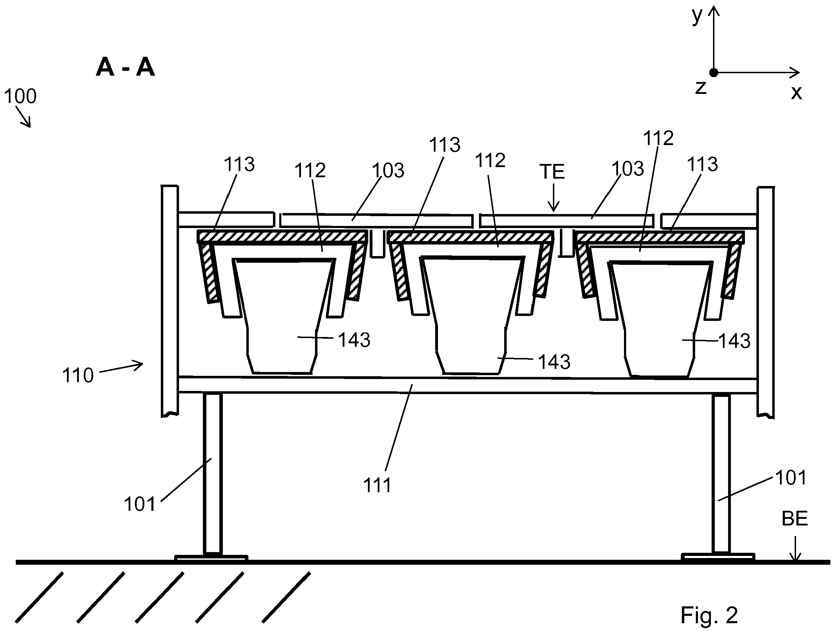

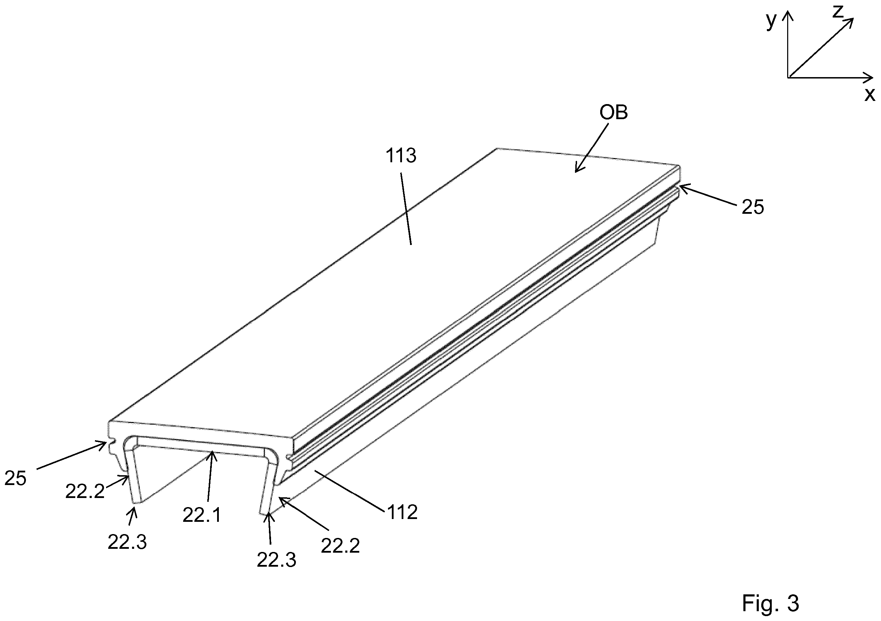

Insbesondere umfasst die Transportvorrichtung 100 hierfür wenigstens ein, eine geschlossene Schlaufe ausbildendes und in Transportrichtung A endlos umlaufend angetriebenes Transportelement 103, das beispielsweise als Transportriemen, Transportkette, Scharnierbandkette oder Transportmatte ausgebildet sein kann. Das Transportelement 103 stützt sich gegen wenigstens eine Gleitleiste 113 -dargestellt in den Figuren 2 bis 5 - an seiner Unterseite ab, während die Oberseite des Transportelementes 103 zumindest entlang einer Transportstrecke TS eine horizontale oder im Wesentlichen horizontale Transportebene oder -fläche TE in der XZ-Ebene ausbildet, auf der das Transportgut 102 mit seinem Transportgutboden oder seinem Standboden aufsteht. Wie insbesondere aus den Figuren 1 und 2 ersichtlich, ist das wenigstens eine Transportelement 103 zumindest entlang der Transportstrecke TS auf der wenigstens einen Gleitleiste 113 gleitend aufliegend geführt. Dabei können auch mehrere, beispielsweise zwei, drei, vier oder mehr Transportelemente 103 vorgesehen sein, die mehrzügig, d.h. quer oder senkrecht zur Transportrichtung A einander benachbart angeordnet sind, sodass die mehreren Transportelemente 103 zumindest mit einem Teil ihrer jeweils oberen Länge ihrer entsprechenden Schlaufe die gemeinsame Transportebene TE ausbilden, auf der das Transportgut 102 mit seiner Bodenfläche zumindest teilweise aufstehen kann.

An dem bezogen auf die Transportrichtung A vorderen Ende 1.11 sowie bezogen auf die Transportrichtung A rückwärtigen Ende 1.12 ist das wenigstens eine Transportelement 103 jeweils über Umlenkeinrichtungen 141, 142 geführt, wobei das wenigstens eine Transportelement 103 an seinem vorderen Ende 1.11 über eine vordere Umlenkeinrichtung 141 und an seinem rückwärtigen Ende 1.12 über eine rückwärtige Umlenkeinrichtung 142 geführt ist. Zwischen der vorderen und der rückwärtigen Umlenkeinrichtung 141, 142 ist mittels des wenigstens einen Transportelementes 103 eine Transportstrecke TS für das Transportgut 102 ausgebildet. Die Transportstrecke TS, auf der das Transportgut 102 befördert werden kann, ist also insbesondere von der rückwärtigen Umlenkeinrichtung 142 in Transportrichtung A bis zur vorderen Umlenkeinrichtung 141 ausgebildet.

Dabei kann auch vorgesehen sein, dass die vordere und/oder die hintere Umlenkeinrichtung 141, 142 motorisch antreibbar ausgebildet ist. Beispielsweise kann die vordere und/oder hintere Umlenkeinrichtung 141, 142 als Elektromotor, vorzugsweise als getriebeloser Elektromotor, beispielsweise in Form eines direkt angetriebenen Elektromotors, bevorzugt in Form eines Schrittmotors, eines Servomotors oder eines Torquemotors, ausgebildet sein.

Zudem weist die Transportvorrichtung 100, wie in der Figur 1 nur schematisch angedeutet, einen Maschinenrahmen 110 auf, der ein Gerüst ausbildet, an dem sämtliche Komponenten der Transportvorrichtung 100 angeordnet bzw. aufgenommen sind und mittels dem die Transportvorrichtung 100 über Stützelemente 101 bzw. Beine auf einer Bodenebene BE aufsteht.

Dabei ist die wenigstens eine Gleitleiste 113 zumindest abschnittsweise entlang der Transportstrecke TS mit dem jeweiligen Profilelement 112 direkt verbunden, was nachstehend noch nähergehend erläutert wird. Das jeweilige Profilelement 112 ist dabei seinerseits wiederum mit dem wenigstens einem Tragkörper 111 des Maschinenrahmens 110 verbunden und zwar direkt oder indirekt. Wie aus der Figur 2 ersichtlich ist kann das jeweilige Profilelement 112 auch über wenigstens ein Verbindungselement 143 mit dem Tragkörper 111 verbunden sein.

Wie hierbei insbesondere aus der Figur 2 mehr im Detail ersichtlich, weist der Maschinenrahmen 110 vorzugsweise wenigstens einen sich über die gesamte Transportelementbreite in X-Achsen Richtung, also quer zur Transportrichtung A, erstreckenden Tragkörper 111 auf, der einen Grundträger zur Aufnahme weiterer Bauteile und Komponenten der Transportvorrichtung 100 ausbildet und an dem zwei Stützelemente 101 fest angeordnet sind. Der Tragkörper 111 bildet dabei ein Trägerelement, beispielsweise einen aus Edelstahl herstellten U-Profilträger aus.

Vorzugsweise umfasst der Maschinenrahmen 110 zwei oder auch mehrere Tragkörper 111, die über die gesamte Länge der Transportstrecke TS, also in Z-Achsen Richtung, beispielweise in gleichmäßigen Abständen verteilt vorgesehen sind, und sich über jeweils zumindest zwei Stützelemente 101 auf der Bodenebene BE abstützen. Dabei ist vorteilhaft zumindest ein Tragkörper 111 im Bereich des vorderen Endes 1.11 und zumindest ein weiterer Tragkörper 111 im Bereich des hinteren Endes 1.12 der Transportvorrichtung 100 vorgesehen.

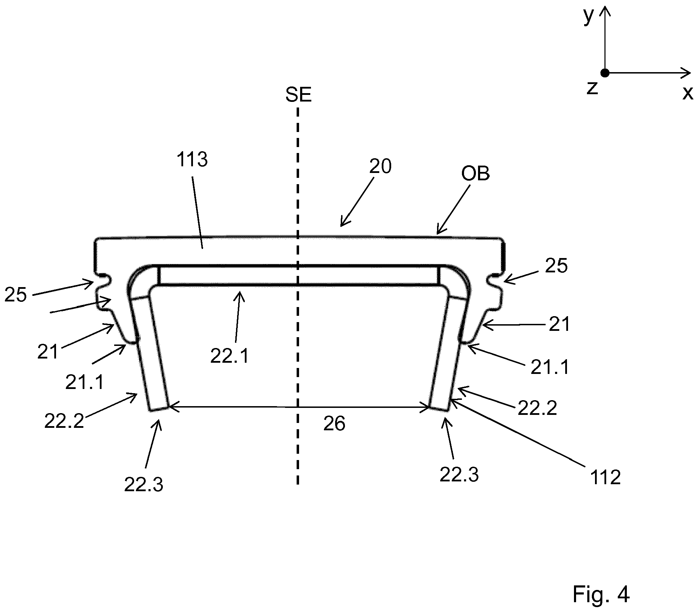

Dabei kann das zumindest eine Profilelement 112 in seiner in der Vorderansicht der Figur 4 gezeigten Querschnittsfläche, also der XY-Ebene, im Wesentlichen C-förmig, insbesondere als C-Profilelement, ausgebildet sein. Das wenigstens eine Profilelement 112 weist dabei drei Schenkelabschnitte, nämlich einen mittleren Schenkelabschnitt 22.1, sowie zwei seitliche Schenkelabschnitte 22.2, auf. Derartige Profilelemente 112 sind dem Fachmann auf dem Gebiet der Transportvorrichtungen 100 in der Getränkeindustrie als C-Profilelemente bekannt. Die Profilelemente 112 erstrecken sich in Längsrichtung in Z-Achsen Richtung.

Dabei ist der Querschnitt des Profilelements 112 bevorzugt spiegelsymmetrisch zu einer Spiegelebene SE ausgebildet, wobei die Spiegelebene SE parallel orientiert zu der YZ-Ebene verläuft. Insbesondere ist der Querschnitt des Profilelementes 112 in Z-Achsen Richtung identisch ausgebildet.

Die seitlichen Schenkelabschnitte 22.2 schließen dabei im Querschnitt mit dem mittleren Schenkelabschnitt 22.1 jeweils einen Winkel kleiner als 90° Grad ein, so dass die jeweiligen freien Enden 22.3 der beiden seitlichen Schenkelabschnitte 22.2 spitzwinklig in einer gedachten Verlängerung der freien Enden 22.3 aufeinander zulaufen und sich insbesondere in der Spiegelebene SE schneiden. Die beiden seitlichen Schenkelabschnitte 22.2 sind dabei mit ihren jeweiligen freien Enden 22.3 aufeinander zu orientiert ausgebildet. Der mittlere sowie die seitlichen Schenkelabschnitte 22.1, 22.2 begrenzen damit eine Ausnehmung 26, die nach unten, also in Richtung des Tragkörpers 111, offen ausgebildet ist. Die Ausnehmung 26 bildet dabei also eine Nut aus, in der das Verbindungselement 143 fest ausgenommen werden kann.

Erfindungsgemäß ist dabei vorgesehen, dass zur direkten Verbindung der entsprechenden Gleitleiste 113 mit dem zugehörigen Profilelement 112 die wenigstens eine Gleitleiste 113 zumindest abschnittsweise entlang der Transportstrecke TS, also in Z-Achsen Richtung, formschlüssig auf das Profilelement 112 aufgesteckt und/oder aufgedrückt ist. Insbesondere ist die Gleitleiste 113 derart formschlüssig auf das Profilelement 112 aufgesteckt, dass es dadurch lagefixiert gehalten ist. Damit wird eine Relativbewegung zwischen der jeweiligen Gleitleiste 113 und dem Profilelement 112 in Transportrichtung A oder auch quer zur Transportrichtung A verhindert. Auch kann zusätzlich noch vorgesehen sein, dass die Gleitleiste 113 form- und kraftschlüssig auf das Profilelement 112 aufgesteckt und/oder aufgedrückt ist.

Vorzugsweise ist entsprechende Gleitleiste 113 über ihre gesamte jeweilige Längserstreckung, die sich in Z-Achsen Richtung erstreckt, formschlüssig auf dem zugehörigen Profilelement 112 aufgesteckt und damit an dem Profilelement 112 gehalten. Auch kann die entsprechende Gleitleiste 113 über ihre gesamte jeweilige Längserstreckung form- und kraftschlüssig auf das Profilelement 112 aufgesteckt und damit an dem Profilelement 112 gehalten sein.

Dabei ist das wenigstens eine Transportelement 103 zumindest entlang der Transportstrecke TS auf wenigstens einer Gleitleiste 113 gleitend aufliegend geführt, wobei die wenigstens eine Gleitleiste 113 in einer Ebene parallel oder im Wesentlichen parallel unterhalb der Transportebene TE vorgesehen ist. Vorteilhaft sind jedoch mehrere Gleitleisten 113 vorgesehen, und zwar besonders vorteilhaft entlang der gesamten Transportstrecke TS entlang derer das Transportelement 103 bewegt wird.

Es können dabei sowohl quer, also in X-Achsen Richtung, als auch längs der Transportstrecke TS, also in Z-Achsen Richtung, jeweils mehrere Gleitleisten 113 unterhalb des Transportelementes 103 vorgesehen sein. Beispielsweise können, wie in der Figur 2 dargestellt, drei quer zur Transportstrecke TS angeordnete Gleitleisten 113 vorgesehen sein, die in ihrer jeweiligen Längserstreckung in Z-Achsen Richtung, im Wesentlichen parallel zueinander angeordnet sind.

Auch können nicht nur quer, sondern auch längs der Transportstrecke TS, also in Z-Achsen Richtung, jeweils mehrere Gleitleisten 113 vorgesehen sein, die einander unmittelbar benachbart über vorzugsweise die gesamte Länge der Transportstrecke TS vorgesehen sind. Weiterhin vorteilhaft sind die dann in Längsrichtung der Transportstrecke TS vorgesehenen Gleitleisten 113 gegenseitig fluchtend zueinander angeordnet, und zwar derart, dass eine aneinander liegende gerade Reihe von sich gegenseitig unmittelbar benachbart anschließenden Gleitleisten 113 ausgebildet ist.

Vorzugsweise weisen die Gleitleisten 113 auf ihrer dem Transportelement 103 zugewandten Oberseite eine, einen geringen Reibkoeffizienten aufweisende Oberfläche auf, die insbesondere aus einem Kunststoff gebildet sein kann.

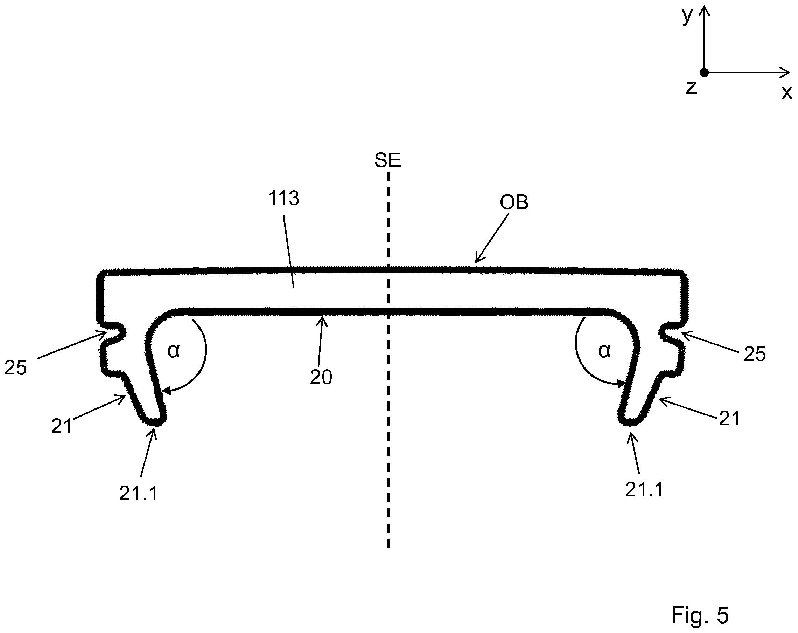

Dabei kann die Gleitleiste 113 in ihrer, in der Vorderansicht der Figuren 4 oder Figur 5 gezeigten Querschnittsfläche, also der XY-Ebene, im Wesentlichen U-förmig, insbesondere nach Art eines U-Profilelementes, ausgebildet sein. Die jeweilige Gleitleiste 113 weist dabei drei Schenkelabschnitte, nämlich einen ein Grundteil ausbildenden Stegabschnitt 20, sowie zwei seitliche Schenkelabschnitte 21, auf. Die Gleitleisten 113 erstrecken sich in ihrer Längsrichtung in Z-Achsen Richtung.

Die jeweilige Gleitleiste 113 ist dabei insbesondere einteilig, vorzugsweise einstückig ausgebildet.

Vorzugsweise ist der Querschnitt der jeweiligen Gleitleiste 113 spiegelsymmetrisch zu der Spiegelebene SE ausgebildet, wobei die Spiegelebene SE parallel orientiert zu der YZ-Ebene verläuft. Insbesondere ist der Querschnitt der jeweiligen Gleitleiste 113 über deren Längserstreckung in Z-Achsen Richtung identisch ausgebildet.

Die seitlichen Schenkelabschnitte 21 schließen dabei im Querschnitt mit dem Stegabschnitt 20 jeweils einen Winkel α kleiner als 90° Grad ein, so dass die jeweiligen freien Enden 21.1 der beiden seitlichen Schenkelabschnitte 21 spitzwinklig in einer gedachten Verlängerung der freien Enden 21.1 aufeinander zulaufen und sich insbesondere in der Spiegelebene SE schneiden. Die beiden seitlichen Schenkelabschnitte 21 sind dabei mit ihren jeweiligen freien Enden 21.1 aufeinander zu orientiert ausgebildet.

Insbesondere schließen die beiden seitlichen Schenkelabschnitte 21 mit dem Stegabschnitt 20 jeweils einen Winkel α zwischen 85° und 60°Grad, vorzugsweise zwischen 80° und 65°Grad, besonders bevorzugt einen Winkel von 76°, ein.

Der Winkel α zwischen dem Stegabschnitt 20 und den jeweiligen Schenkelabschnitte 21 ist dabei derart ausgebildet, dass die elastisch verformbaren Schenkelabschnitte 21 der entsprechenden Gleitleiste 113 in senkrechter Bewegungsrichtung, also in y-Achsen Richtung, auf das jeweilige Profilelement 112 aufschiebbar und/oder aufdrückbar und anschließend gehalten sind. Die Schenkelabschnitte 21 sind also derart elastisch verformbar ausgebildet, dass zumindest die freien Enden 21.1 bei Aufstecken und/oder Aufdrücken der Gleitleiste 113 auf das Profilelement 112 auseinander gedrückt werden und sich anschließend wieder formschlüssig an das Profilelement 112, insbesondere an die seitlichen Schenkelabschnitte 22.2 des Profilelementes 112, anlegen.

Vorzugweise liegen die seitlichen Schenkelabschnitte 21 der Gleitleiste 113 kraft- und formschlüssig an den seitlichen Schenkelabschnitten 22.2 des Profilelementes 112 an, und zwar besonders bevorzugt unter einer auf die Schenkelabschnitte 22.2 einwirkenden definierbaren Vorspannkraft. In anderen Worten weisen also die Schenkelabschnitte 21 der Gleitleiste 113 auch nach dem Aufstecken auf das Profilelement 112 noch weiterhin eine Restverformung, insbesondere Auslenkung im Vergleich zu dem nicht montieren Zustand, auf, so dass eine Vorspannkraft zwischen dem Profilelement 112 und der entsprechenden Gleitleiste 113 entsteht.

Insbesondere ist die durch das Aufstecken oder Aufdrücken der Gleitleiste 113 auf dem Profilelement 112 die Innenkontur der Gleitleiste 113 kontaktschlüssig anliegend an der Außenkontur des Profilelementes 112 ausgebildet, und zwar vorzugsweise über die gesamte Längserstreckung der Gleitleiste 113 in Z-Achsen Richtung. Damit liegt die Gleitleiste 113 plan und eben über ihre gesamte Längserstreckung an dem Profilelement 112 an.

Dabei kann auch vorgesehen sein, dass die seitlichen Schenkelabschnitte 21 der Gleitleiste 113 die seitlichen Schenkelabschnitte 22.2 des Profilelementes 112 zumindest teilweise umgreifen.

Es kann dabei vorgesehen sein, dass die wenigstens eine Gleitleiste 113 im Übergangsbereich von ihrem entsprechenden Stegabschnitt 20 zu den jeweiligen Schenkelabschnitten 21 eine Materialschwächung aufweist. Die Materialschwächung kann insbesondere in Form einer sich entlang der Längserstreckung der Gleitleiste 113 erstreckenden Ausnehmung 25 nach Art einer Nut ausgebildet sein. Durch eine gezielte Änderung der Materialschwächung kann eine definierte Verformung der seitlichen Schenkelabschnitte 21 sowie eine damit erzeugbare Rückstellkraft im montierten Zustand der Gleitleiste 113 auf dem Profilelemente 112 eingestellt werden. Eine gewählte Materialschwächung in Kombination mit den Abmessungen der seitlichen Schenkelbschnitte 21 erlaubt es, die mögliche Verformbarkeit der seitlichen Schenkelabschnitte 21 sowie die dabei aufzubringenden Kräfte genau zu bestimmen.

Gemäß einer weiteren, nicht dargestellten, Ausführungsvariante kann vorgesehen sein, dass die wenigstens eine Gleitleiste 113 im Übergangsbereich von ihrem entsprechenden Stegabschnitt 20 zu den jeweiligen Schenkelabschnitten 21 an der Außenkontur der seitlichen Schenkelabschnitte 21 eine Materialverstärkung, insbesondere in Form einer zusätzlichen Materialwulst, aufweist. Hierdurch kann erreicht werden, dass für das Aufstecken der Gleitleiste 113 auf das Profilelement 112 eine im Vergleich zu den vorherigen Ausführungsvarianten größere Aufsteckkraft für die elastische Auslenkung der seitlichen Schenkelabschnitte 21 aufgewendet werden muss und nach dem Aufstecken und/oder Aufdrücken einer solchen Gleitleiste 113 auf das Profilelement 112 eine größere Rückstellkraft erzeugbar ist. Die Rückstellkraft der seitlichen Schenkelabschnitte 21 bildet dabei eine Art Klemmkraft aus, mit der dieser seitlichen Schenkelabschnitte 21 an den seitlichen Schenkelabschnitten 22.2 des Profilelementes 112 anliegen.

Auch vorteilhaft kann vorgesehen sein, dass die Gleitleiste 113 in ihrem auf dem Profilelement 112 aufgesteckten und damit montierten Zustand eine derart große Klemmkraft der seitlichen Schenkelabschnitte 21 an den seitlichen Schenkelabschnitten 22.2 des Profilelementes 112 erzeugt, dass die Gleitleiste 113 lage- und ortsfest an das Profilelement 112 geklemmt ist. Insbesondere ist die Gleitleiste 113 in ihrem auf dem Profilelement 112 montierten Zustand gegen ein Verschieben der Gleitleiste 113 relativ zu dem Profilelement 112 gesichert.

Gemäß einer weiteren nicht dargestellten Ausführungsvariante kann das wenigstens eine Transportelement 103 zumindest im Übergangsbereich von der vorderen Umlenkeinrichtung 141 auf die zumindest eine Gleitleiste 113 zumindest abschnittsweise über wenigstens einen Einlauffinger geführt sein. Der wenigstens eine Einlauffinger ist dabei dazu ausgebildet, einen möglichst materialschonenden Übergang des wenigstens einen Transportelementes 103 zwischen Hintrum und Rücktrum der Transportvorrichtung 100 auszubilden. Insbesondere bildet der wenigstens eine Einlauffinger eine materialschonende Übergabe des wenigstens einen Transportelementes 103 von der vorderen Umlenkeinrichtung 141 auf die wenigstens eine Gleitleiste 113 aus. Dafür ist der wenigstens eine Einlauffinger mit der wenigstens einen Gleitleiste 113 und/oder mit dem zumindest einen Profilelement 112 lösbar verbunden. Es kann dabei vorgesehen sein, dass die Gleitleiste 113 sowohl auf das Profilelement 112 als auch den Einlauffinger formschlüssig aufgesteckt ist. Diese Lösung ermöglicht die für den Transport von standunsicheren Transportgut 102 erforderliche Ebenheit und schafft damit die Voraussetzungen für den Einsatz von kostengünstigen Bauteilen und ermöglicht den Verzicht auf zusätzliche, teure Verbindungselemente.

Gemäß einer nochmals weiteren Ausführungsvariante kann vorgesehen sein, dass die wenigstens eine Gleitleiste 113 an ihrer dem Profilelement 112 gegenüberliegenden Oberseite OB im Querschnitt konvex, also von dem Profilelement 112 weggerichtet, gewölbt ist. Insbesondere kann die Gleitleiste 113 über ihre gesamte Längserstreckung an der Oberseite OB im Querschnitte konvex gewölbt ausgebildet sein.

Durch die konvexe Formgebung der Oberseite OB, die insbesondere an dem Stegabschnitt 20 der Gleitleiste 113 ausgebildet ist, können sich die auf den Gleitleisten 113 aufliegenden Transportelemente 103 um ein bestimmtes Maß um ihre Längsachse bewegen und so beispielsweise Höhenschwankungen oder Höhenabweichungen zwischen direkt nebeneinander benachbarten Transportelementen 103, Gleitleisten 113 oder auch Profilelementen 112 ausgleichen. Diese Fähigkeit ist insbesondere dann von großem Vorteil, wenn beispielsweise zwei direkt nebeneinander angeordnete Profilelemente 112 einen gewissen Höhenversatz aufweisen. Durch die um ihre Längsachse beweglichen Transportelemente 103 kann dieser Höhenversatz durch das Gewicht der auf den Transportelementen 103 aufstehenden Transportgütern 102 etwas ausgeglichen werden. Bewegt sich ein Transportgut 102 von einem Transportelement 103 auf ein benachbartes Transportelement 103, so stößt das Transportgut 102 nicht gegen eine Kante, sondern gleitet Stoß frei auf das nächste, benachbarte Transportelement 103.

### Bezugszeichenliste

- 100: Transportvorrichtung
- 101: Stützelement
- 102: Transportgut
- 103: Transportelement
- 110: Maschinenrahmen
- 111: Tragkörper
- 112: Profilelement
- 113: Gleitleiste
- 141: vordere Umlenkreinrichtung
- 142: rückwärtige Umlenkeinrichtung
- 143: Verbindungselement

- 1.11: vorderes Ende
- 1.12: rückwärtiges Ende

- 20: Stegabschnitt
- 21: seitliche Schenkelabschnitte
- 21.1: freies Ende
- 22.1: mittlerer Schenkelabschnitt
- 22.2: seitlicher Schenkelabschnitt
- 22.3: freies Ende
- 25: Ausnehmung
- 26: Ausnehmung

- A: Transportrichtung
- BE: Bodenebene
- TS: Transportstrecke
- TE: Transportebene
- SE: Spiegelebene
- OB: Oberseite
- α: Winkel

## Patentansprüche

1. Transportvorrichtung zum Transportieren von Transportgut (102) in einer Transportrichtung (A), umfassend wenigstens einen Maschinenrahmen (110), an dem wenigstens ein, eine Schlaufe bildendes und umlaufend angetriebenes Transportelement (103) angeordnet ist, wobei das Transportelement (103) über eine bezogen auf die Transportrichtung (A) vordere Umlenkeinrichtung (141) sowie über eine bezogen auf die Transportrichtung (A) rückwärtige Umlenkeinrichtung (142) geführt ist, wobei zwischen der vorderen und der rückwärtigen Umlenkeinrichtung (141, 142) mittels des wenigstens einen Transportelementes (103) eine Transportstrecke (TS) für das Transportgut (102) ausgebildet ist, wobei das wenigstens eine Transportelement (103) zumindest entlang der Transportstrecke (TS) auf wenigstens einer Gleitleiste (113) gleitend aufliegend geführt ist, wobei die wenigstens eine Gleitleiste (113) zumindest abschnittsweise entlang der Transportstrecke (TS) mit einem Profilelement (112) direkt verbunden ist, das seinerseits mit wenigstens einem Tragkörper (111) des Maschinenrahmens (110) verbunden ist,
wobei zur direkten Verbindung die wenigstens eine Gleitleiste (113) zumindest abschnittsweise entlang der Transportstrecke (TS) formschlüssig auf das Profilelement (112) aufgesteckt und/oder aufgedrückt ist, und wobei die wenigstens eine Gleitleiste (113) eine im Wesentlichen U-förmige Querschnittfläche ausbildet, indem die wenigstens eine Gleitleiste (113) einen, einen Grundteil ausbildenden Stegabschnitt (20) sowie zwei sich seitlich daran erstreckende Schenkelabschnitte (21) aufweist, **dadurch gekennzeichnet, dass** die Schenkelabschnitte (21) derart elastisch verformbar ausgebildet sind, dass zumindest deren freien Enden (21.1) bei Aufstecken der Gleitleiste (113) auf das Profilelement (112) auseinander gedrückt werden und sich anschließend wieder zumindest formschlüssig an das Profilelement (112) anlegen.

2. Transportvorrichtung nach Anspruch 1, **dadurch gekennzeichnet, dass** zur direkten Verbindung die wenigstens eine Gleitleiste (113) zumindest abschnittsweise entlang der Transportstrecke (TS) form- und kraftschlüssig auf das Profilelement (112) aufgesteckt ist.

3. Transportvorrichtung nach Anspruch 1 oder 2, **dadurch gekennzeichnet, dass** zumindest eine Gleitleiste (113) über ihre gesamte Längserstreckung form- und/oder kraftschlüssig auf das Profilelement (112) aufgesteckt und an dem Profilelement (112) lagefixiert gehalten ist.

4. Transportvorrichtung nach einem der vorangehenden Ansprüche, **dadurch gekennzeichnet, dass** die wenigstens eine Gleitleiste (113) in einer Ebene parallel oder im Wesentlichen parallel unterhalb einer Transportebene (TE) lagefixiert auf das Profilelement (112) aufgesteckt ist.

5. Transportvorrichtung nach einem der vorangehenden Ansprüche, **dadurch gekennzeichnet, dass** die wenigstens eine Gleitleiste (113) einteilig, insbesondere einstückig, ausgebildet ist

6. Transportvorrichtung nach einem der vorangehenden Ansprüche, **dadurch gekennzeichnet, dass** die wenigstens eine Gleitleiste (113) spiegelsymmetrisch zu einer lotrecht zur Transportebene (TE) orientierten Spiegelebene (SE) ausgebildet ist.

7. Transportvorrichtung nach einem der vorangehenden Ansprüche, **dadurch gekennzeichnet, dass** die wenigstens eine Gleitleiste (113) über ihre Längserstreckung entlang der Transportstrecke (TS) im Querschnitt identisch ausgebildet ist.

8. Transportvorrichtung nach einem der vorangehenden Ansprüche, **dadurch gekennzeichnet, dass** die seitlichen Schenkelabschnitte (21) mit dem Stegabschnitt (20) im Querschnitt jeweils einen Winkel (α) kleiner 90° Grad einschließen, wobei der der Winkel (α) bevorzugt zwischen 85° und 60° Grad, vorteilhaft zwischen 80° und 65° liegt und besonders bevorzugt 76° Grad beträgt.

9. Transportvorrichtung nach einem der vorangehenden Ansprüche, **dadurch gekennzeichnet, dass** die Schenkelabschnitte (21) der wenigstens einen Gleitleiste (113) kraft- und formschlüssig an seitlichen Schenkelabschnitten (22.2) des Profilelementes (112) anliegen, und zwar vorzugsweise unter einer auf die Schenkelabschnitte (22.2) einwirkenden definierten Vorspannkraft.

10. Transportvorrichtung nach einem der vorangehenden Ansprüche, **dadurch gekennzeichnet, dass** durch das Aufstecken der wenigstens eine Gleitleiste (113) auf dem Profilelement (112) die Innenkontur der Gleitleiste (113) kontaktschlüssig an der Außenkontur des Profilelementes (112) anliegt, und vorzugsweise über die gesamte Längserstreckung der Gleitleiste (113).

11. Transportvorrichtung nach einem der vorangehenden Ansprüche, **dadurch gekennzeichnet, dass** die wenigstens eine Gleitleiste (113) im Übergangsbereich von dem Stegabschnitt (20) zu den seitlichen Schenkelabschnitten (21) eine Materialschwächung aufweist.

12. Transportvorrichtung nach einem der vorangehenden Ansprüche, **dadurch gekennzeichnet, dass** die wenigstens eine Gleitleiste (113) im Übergangsbereich von dem Stegabschnitt (20) zu den seitlichen Schenkelabschnitten (21) an der Außenkontur der seitlichen Schenkelabschnitte (21) eine Materialverstärkung aufweist.

13. Transportvorrichtung nach einem der vorangehenden Ansprüche, **dadurch gekennzeichnet, dass** die wenigstens eine Gleitleiste (113) auf das Profilelement (112) und einen Einlauffinger form- und/oder kraftschlüssig aufgesteckt ist.

14. Transportvorrichtung nach einem der vorangehenden Ansprüche, **dadurch gekennzeichnet, dass** die wenigstens eine Gleitleiste (113) an ihrer Oberseite (OB) im Querschnitt konvex gewölbt ist.

## Claims

1. Transport device for transporting transport goods items (102) in a transport direction (A), comprising at least one machine frame (110), arranged at which is a transport element (103), which forms a loop and is driven such as to circulate, wherein the transport element (103) is guided via a front deflection device (141), related to the direction of transport (A), as well as via a rear deflection device (142), related to the direction of transport (A), wherein a transport route (TS) for the transport goods items (102) is formed between the front and rear deflection devices (141, 142), by means of the at least one transport element (103), wherein the at least one transport element (103) is guided such as to slide at least along the transport route (TS) on at least one sliding rail (113), wherein the at least one sliding rail (113) is directly connected at least in sections along the transport route (TS) to a profile element (112), which in turn is connected to at least one support body (111) of the machine frame (110),
wherein, for the direct connection, the at least one sliding rail (113) is mounted and/or pressed onto the profile element (112) in positive fit at least in sections along the transport route (TS), and wherein the at least one sliding rail (113) forms an essentially U-shaped cross-section surface, wherein the at least one sliding rail (113) comprises a web section (20), forming a base part, as well as two limb sections (21) extending sideways from this, **characterised in that** the limb sections (21) are configured as being elastically deformable, in such a way that, when the sliding rail (113) is mounted onto the profile element (112), at least their free ends (21.1) are pressed apart from one another and then once again come in contact with the profile element (112), at least in positive fit.

2. Transport device according to claim 1, **characterised in that**, for the direct connection, the at least one sliding rail (113) is mounted onto the profile element (112) in positive and non-positive fit at least in sections along the transport route (TS).

3. Transport device according to claim 1 or 2, **characterised in that** at least one sliding rail (113) is mounted over its entire longitudinal extension onto the profile element (112) in positive or non-positive fit, and is held in a fixed position on the profile element (112).

4. Transport device according to any one of the preceding claims, **characterised in that** the at least one sliding rail (113) is fixed onto the profile element (112) in position in a plane parallel or essentially parallel beneath a transport plane (TE).

5. Transport device according to any one of the preceding claims, **characterised in that** the at least one sliding rail (113) is configured as being of one part, in particular of one piece.

6. Transport device according to any one of the preceding claims, **characterised in that** the at least one sliding rail (113) is configured as mirror-symmetrical to a mirror plane (SE) oriented perpendicular to the transport plane (TE).

7. Transport device according to any one of the preceding claims, **characterised in that** the at least one sliding rail (113) is configured as identical in cross-section over its longitudinal extension along the transport route (TS).

8. Transport device according to any one of the preceding claims, **characterised in that** the side limb sections (21) in each case enclose with the web section (20) an angle (α) which is less than 90°, wherein the angle (α) preferably amounts to between 85° and 60°, advantageously to between 80° and 65°, and for particular preference 76°.

9. Transport device according to any one of the preceding claims, **characterised in that** the limb sections (21) of the at least one sliding rail (113) come in contact in positive and non-positive fit with side limb sections (22.2) of the profile element (112), and preferably under a defined tension force which takes effect on the limb sections (22.2).

10. Transport device according to any one of the preceding claims, **characterised in that**, due to the mounting of the at least one sliding rail (113) onto the profile element (112), the inner contour of the sliding rail (113) comes in contact fit with the outer contour of the profile element (112), and preferably over the entire longitudinal extension of the sliding rail (113).

11. Transport device according to any one of the preceding claims, **characterised in that** the at least one sliding rail (113) exhibits a material weakening in the transition region from the web section (20) to the side limb sections (21).

12. Transport device according to any one of the preceding claims, **characterised in that** the at least one sliding rail (113) exhibits a material reinforcement in the transition region from the web section (20) to the side limb sections (21) at the outer contour of the side limb sections (21).

13. Transport device according to any one of the preceding claims, **characterised in that** the at least one sliding rail (113) is mounted onto the profile element (112) and onto an inlet finger element, in positive and non-positive fit.

14. Transport device according to any one of the preceding claims, **characterised in that** the at least one sliding rail (113) is convex cambered in cross-section on its upper side (OB).

## Revendications

1. Dispositif de transport pour le transport d'un produit à transporter (102) dans un sens de transport (A), comprenant au moins un bâti de machine (110), au niveau duquel est agencé au moins un élément de transport (103) entraîné en rotation et formant une boucle, dans lequel l'élément de transport (103) est guidé par le biais d'un dispositif de renvoi (141) avant par rapport au sens de transport (A) ainsi que par le biais d'un dispositif de renvoi (142) arrière par rapport au sens de transport (A), dans lequel un itinéraire de transport (TS) pour le produit à transporter (102) est réalisé entre le dispositif de renvoi avant et le dispositif de renvoi arrière (141, 142) au moyen d'au moins un élément de transport (103), dans lequel l'au moins un élément de transport (103) est guidé en reposant de manière glissante au moins le long de l'itinéraire de transport (TS) sur au moins une baguette de glissement (113), dans lequel l'au moins une baguette de glissement (113) est directement reliée au moins par sections le long de l'itinéraire de transport (TS) à un élément profilé (112) qui est relié de son côté à au moins un corps porteur (111) du bâti de machine (110),
dans lequel pour la liaison directe, l'au moins une baguette de glissement (113) est enfichée et/ou pressée au moins par sections le long de l'itinéraire de transport (TS) par complémentarité de formes sur l'élément profilé (112), et dans lequel l'au moins une baguette de glissement (113) réalise une aire de section sensiblement en forme de U, en ce que l'au moins une baguette de glissement (113) présente une section de nervure (20) réalisant une partie de fond ainsi que deux sections de branche (21) s'étendant latéralement dessus, **caractérisé en ce que** les sections de branche (21) sont réalisées de manière déformable élastiquement de telle manière qu'au moins leurs extrémités libres (21.1) soient écartées l'une de l'autre lors de l'enfichage de la baguette de glissement (113) sur l'élément profilé (112) et se posent ensuite de nouveau moins par complémentarité de formes contre l'élément profilé (112).

2. Dispositif de transport selon la revendication 1, **caractérisé en ce que** pour la liaison directe, l'au moins une baguette de glissement (113) est enfichée au moins par sections le long de l'itinéraire de transport (TS) par complémentarité de formes et à force sur l'élément profilé (112).

3. Dispositif de transport selon la revendication 1 ou 2, **caractérisé en ce qu'**au moins une baguette de glissement (113) est enfichée sur son étendue longitudinale entière par complémentarité de formes et/ou à force sur l'élément profilé (112) et est maintenue fixée en position sur l'élément profilé (112).

4. Dispositif de transport selon l'une quelconque des revendications précédentes, **caractérisé en ce que** l'au moins une baguette de glissement (113) est enfichée fixée en position dans un plan parallèlement ou sensiblement parallèlement en dessous d'un plan de transport (TE) sur l'élément profilé (112).

5. Dispositif de transport selon l'une quelconque des revendications précédentes, **caractérisé en ce que** l'au moins une baguette de glissement (113) est réalisée en une partie, en particulier d'un seul tenant.

6. Dispositif de transport selon l'une quelconque des revendications précédentes, **caractérisé en ce que** l'au moins une baguette de glissement (113) est réalisée de manière symétrique en miroir à un plan de miroir (SE) orienté perpendiculairement au plan de transport (TE).

7. Dispositif de transport selon l'une quelconque des revendications précédentes, **caractérisé en ce que** l'au moins une baguette de glissement (113) est réalisée de manière identique en section transversale sur son étendue longitudinale le long de l'itinéraire de transport (TS).

8. Dispositif de transport selon l'une quelconque des revendications précédentes, **caractérisé en ce que** les sections de branche (21) latérales forment avec la section de nervure (20) en section transversale respectivement un angle (α) inférieur à 90° degrés, dans lequel l'angle (α) est compris de préférence entre 85° et 60° degrés, avantageusement entre 80° et 65° et de manière particulièrement préférée de 76°.

9. Dispositif de transport selon l'une quelconque des revendications précédentes, **caractérisé en ce que** les sections de branche (21) de l'au moins une baguette de glissement (113) reposent à force et par complémentarité de formes contre des sections de branche (22.2) latérales de l'élément profilé (112), et ce de préférence sous une force de précontrainte définie agissant sur les sections de branche (22.2).

10. Dispositif de transport selon l'une quelconque des revendications précédentes, **caractérisé en ce que** par l'enfichage de l'au moins une baguette de glissement (113) sur l'élément profilé (112), le contour intérieur de la baguette de glissement (113) repose par contact contre le contour extérieur de l'élément profilé (112), et de préférence sur l'étendue longitudinale entière de la baguette de glissement (113).

11. Dispositif de transport selon l'une quelconque des revendications précédentes, **caractérisé en ce que** l'au moins une baguette de glissement (113) présente dans la zone de transition de la section de nervure (20) aux sections de branche (21) latérales un affaiblissement de matériau.

12. Dispositif de transport selon l'une quelconque des revendications précédentes, **caractérisé en ce que** l'au moins une baguette de glissement (113) présente dans la zone de transition de la section de nervure (20) aux sections de branche (21) latérales au niveau du contour extérieur des sections de branche (21) latérales un renforcement de matériau.

13. Dispositif de transport selon l'une quelconque des revendications précédentes, **caractérisé en ce que** l'au moins une baguette de glissement (113) est enfichée sur l'élément profilé (112) et un doigt d'entrée par complémentarité de formes et/ou à force.

14. Dispositif de transport selon l'une quelconque des revendications précédentes, **caractérisé en ce que** l'au moins une baguette de glissement (113) est incurvée de manière convexe en section transversale sur son côté supérieur (OB).
